# EUROPÄISCHE PATENTSCHRIFT

(11) **EP 0 448 510 B1**
(45) Veröffentlichungstag und Bekanntmachung des Hinweises auf die Patenterteilung: **26.04.1995**
(21) Anmeldenummer: 91810136.1
(22) Anmeldetag: 01.03.1991
(51) Int. Cl.: B23D 63/18, B23D 61/02, B28D 1/12, B24C 1/00, C21D 7/06

(54) **Verfahren zur Vermeidung von Rissen in Trenn- und Schleifscheiben**
Method for avoiding cracks in cutting or grinding discs
Procédé pour éviter des fissures dans des disques de découpage ou de meulage

(30) Priorität: 12.03.1990 DE 4007795
(43) Veröffentlichungstag der Anmeldung: 25.09.1991
(73) Patentinhaber: HILTI Aktiengesellschaft, 9494 Schaan (LI)
(72) Erfinder: Marxer, Georg, FL-9462 Eschen (LI); Sartor, Dietmar, FL-9493 Mauren (LI); Gassner, Helmut, FL-9497 Triesenberg (LI)
(74) Vertreter: Wildi, Roland

(56) Entgegenhaltungen:
- DE-A- 3 504 343
- FR-A- 2 486 432
- GB-A- 1 214 259
- SU-A- 724 286
- SU-A- 1 389 950
- US-A- 3 820 419
- PATENT ABSTRACTS OF JAPAN vol. 14, no. 107 (M-942)(4050) 27 Februar 1990,& JP-A-01 310813 (DENKI KOGYO CO. LTD.) 14 Dezember 1989,
- PATENT ABSTRACTS OF JAPAN vol. 13, no. 11 (C-558)(3359) 11 Januar 1989,& JP-A-63 219521 (DENKI KOGYO K.K.) 13 September 1988,
- PATENT ABSTRACTS OF JAPAN vol. 001, no. 161 (M-053) 20 Dezember 1977,& JP-A-52 107694 (HITACHI SEISAKUSHO K.K.) 09 September 1977,

## Beschreibung

Die Erfindung betrifft ein Verfahren zur Herstellung von Trenn- und Schleifscheiben, welche entlang dem Unfang mit radial verlaufenden Schlitzen versehen sind.

Zum Trennen und Schleifen von Mauerwerk, Gestein, Beton und dergleichen Materialien sind diamantbestückte Scheiben bekannt. Diese Scheiben bestehen aus einem metallenen Scheibenkörper, dessen Umfang mit Diamanten enthaltenden Segmenten versehen ist. Die Verbindung zwischen den Segmenten und den Scheibenkörper erfolgt in der Regel mittels Laserschweissen (siche zum Beispiel DE-A-3 504 343).

Aufgrund der bei der Bearbeitung der vorgenannten Materialien entstehenden Wärme dehnen sich sowohl der Scheibenkörper als auch die Segmente aus. Um zu vermeiden, dass durch diese Ausdehnung störende Verformungen entstehen, ist es üblich, solch bekannte Scheiben entlang ihres Umfanges mit radial verlaufenden Schlitzen zu versehen. Diese Schlitze sind im Scheibenkörper angeordnet und finden aufgrund der in Umfangsrichtung im Abstand voneinander angeordneten diamantbestückten Segmenten ihre Fortsetzung. Dadurch können sich bei Erwärmung sowohl Scheibenkörper als auch Segmente insbesondere auch in Umfangsrichtung ausreichend ausdehnen, so dass die Bearbeitung behindernde oder sich schädlich auf die Scheiben auswirkende Verformungen nicht auftreten können.

Sowohl aus technischen als auch aus wirtschaftlichen Gründen ist es praktisch nur möglich, die vorgenannten Schlitze in einem spanabhebenden Verfahren anzubringen. Als solches Verfahren hat sich in letzter Zeit insbesondere Lasertrennen eingebürgert.

Alle bekannten spanabhebenden Verfahren zum Herstellen von Schlitzen haben den Nachteil, dass scharfe Kanten entstehen, was zu Rissen in den Scheiben führt. Um diesem Nachteil entgegenzuwirken, ist es auch bekannt, im Scheibenkörper kreisförmige Durchbrüche anzuordnen, in welche das zentrumsseitige Ende der Schlitze mündet. Damit entsteht ein quasi hinterschnittener Schlitz, was derzeit die beste bekannte Massnahme gegen die Bildung und Ausbreitung von Rissen darstellt.

Es hat sich gezeigt, dass trotz der vorgenannten Massnahme noch immer ein gewisses Risiko zum Entstehen von Rissen besteht. Solche Risse entstehen insbesondere im Bereich des zentrumsseitigen Endes der Schlitze, was darauf zurückzuführen ist, dass nicht nur die Schlitze, sondern auch gegebenenfalls vorhandene Durchbrüche spanabhebend hergestellt werden, dh wie vorgängig erwähnt zumeist mittels Lasertrennen. Diese auftretenden Risse führen zu Brüchen der Scheiben insbesondere dann, wenn diese grossen Biegebelastungen ausgesetzt sind.

Ausgehend von den geschilderten Nachteilen, liegt der vorliegenden Erfindung die Aufgabe zugrunde, zur Vermeidung einer Rissbildung bei Trenn- und Schleifscheiben der eingangs genannten Art ein Herstellverfahren und danach hergestellte Scheiben zu schaffen.

Nach dem erfindungsgemässen Herstellverfahren werden die beiden Stimseiten der Scheiben im Bereich des zentrumsseitigen Endes der Schlitze mit einer im wesentlichen kreisförmigen, zum zentrumsseitigen Ende der Schlitze konzentrischen Zone einem Kugelstrahlverfahren ausgesetzt.

Kugelstrahlverfahren sind an sich bekannt. Sie finden insbesondere zur Oberflächenverdichtung bei Metallteilen Anwendung. Es werden bei diesem Verfahren gehärtete Stahlkugeln mit einem Durchmesser von 0,2 bis 0,4 mm gegen die Metallteile geschleudert, wobei diese Schleuderbewegung entweder mittels Druckluft oder Zentrifugalkraft erzeugt wird. Im Falle der Erzeugung mittels Druckluft ist eine ausreichend grosse Düse vorhanden, welche den Austritt sowohl der Druckluft als auch der Stahlkugeln erlaubt. Im Falle der Zentrifugalkraft werden die Kugeln einem rotierenden Teil zugeführt und von diesem entsprechend beschleunigt.

Beispielsweise wird dieses Verfahren gemäss US-A-3,820,419 bei der Herstellung von Trennscheiben mit Hakenzahnausbildung eingesetzt. Diese bekannte Trennscheibe weicht von Scheiben der hier in Rede stehenden Art gattungsmässig ab, da ein Unterschied in der Ausbildung und der Wirkungsweise vorliegt.

Nachdem verschiedene Behandlungsverfahren mit dem Ziel einer Rissminderung bei Scheiben der hier in Rede stehenden Art nicht zum Ziel geführt haben, konnte überraschenderweise mit dem genannten Kugelstrahlverfahren der erwünschte Effekt erzielt werden. Ueberraschend ist vor allem, dass die Nachbehandlung von Scheiben mittels Kugelstrahlverfahren zu einer Standzeiterhöhung um das Fünf- bis Zehnfache gegenüber nicht nachbehandelten führt.

Die Wirkung des Kugelstrahlverfahrens bei der Herstellung von Schleifscheiben in der hier angegebenen Art liegt in einer dreifachen Wirkungsweise. Die eine Wirkungsweise besteht darin, dass im Scheibenkörper Druckeigenspannungen an den gefährdeten Kanten des Schlitzes erzeugt werden, die den Belastungen aus dem Betrieb entgegenwirken. Eine weitere Wirkungsweise besteht darin, dass eine Verdichtung an der Oberfläche der Scheibenkörper entsteht und zwar gerade in jenem Bereich, wo aufgrund der bei der Bearbeitung entstehenden Momente die grösste Beanspruchung auftritt. Als dritte Wirkungsweise ist das Runden der bei der spanabhebenden Bearbeitung entstehenden scharfen Kanten anzusehen. Dabei kommt hinzu, dass dieses Runden der Kanten nicht spanabhebend, sondern nach Art eines Kaltverformungsvorganges erfolgt. Insgesamt gesehen hat also die Verwendung des an sich bekannten Verfahrens in erfindungsgemässer Weise eine Kumulation von einzelnen Wirkungsweisen zur Folge, welche bei allen bisher bekannten Anwendungen nicht aufgetreten sind. Ebenso darf nicht ausser acht gelassen werden, dass es sich hier um eine Problematik handelt, welche seit Jahrzehnten bekannt ist und durch verschiedenartigste Methoden weder wirtschaftlich noch wirkungsmässig in befriedigender Weise gelöst werden konnte.

Im Hinblick auf die Erkenntnis, dass vor allem der Bereich des zentrumsseitigen Endes der Schlitze rissgefährdet ist, wird an beiden Stirnseiten der Scheiben eine im wesentlichen kreisförmige, zum zentrumsseitigen Ende der Schlitze den Durchbrüchen konzentrische Zone dem Kugelstrahlverfahren ausgesetzt. Es ist damit gewährleistet, dass der gefährdete Bereich und seine Umgebung ausreichend behandelt werden. Durch die Behandlung der Scheiben an ihren beiden Stirnseiten ist die Gewähr der Beeinflussung entsprechend der vorgenannten Wirkungsweisen ausreichend gegeben. Die Grösse der kreisförmigen Zone ist vorzugsweise derart dimensioniert, dass der Durchmesser der kreisförmigen Zone etwa das Fünf- bis Zehnfache der Schlitze beträgt.

Die Herstellung der Scheiben erfolgt vorzugsweise durch ein Kugelstrahlverfahren, bei welchen die Kugeln mittels Druckluft gegen die Scheibe geschleudert werden. Dabei empfiehlt es sich, die Scheibe mit einer Schablone abzudecken, so dass eine Zone entsprechend vorgenannter Definition dem Kugelstrahlverfahren ausgesetzt wird. Im Sinne einer Rationalisierung und zur Vermeidung einseitiger Beanspruchungen ist es zweckmässig, zwei gegeneinander gerichtete, aber axial versetzte Düsen vorzusehen, zwischen welchen die Scheibe durchläuft, so dass gleichzeitig beide Stirnseiten der Scheibe in einem Takt behandelt werden. Die axiale Versetzung der Düsen verhindert dabei eine Beeinflussung durch gegebenenfalls aufeinanderprallende Kugeln.

Bei den nach dem erfindungsgemässen Verfahren hergestellten Scheiben ist vorzugsweise an beiden Stirnseiten in Bereich des zentrumsseitigen Endes der Schlitze das Material verdichtet. Damit ist gewährleistet, dass die im Scheibenkörper entstehenden Druckeigenspannungen den im Betrieb entstehenden Belastungen entgegenwirken.

Darüber hinaus ist ebenfalls im zentrumsseitigen Endbereich der Schlitze dank dem erfindungsgemässen Verfahren gewährleistet, dass die Kanten der Schlitze zu beiden Stirnseiten geglättet sind. Unter Glättung wird im vorliegenden Falle ein Kantenrunden unter spanloser Bearbeitung verstanden. Diese spanlose Bearbeitung kommt durch das Aufprallen der Kugeln nach dem erfindungsgemässen Kugelstrahlverfahren zustande.

Das erfindungsgemässe Verfahren wird nunmehr anhand von beispielhaften Zeichnungen naher erläutert und zwar zeigen:
- Fig. 1: einen Teil einer Trenn- und Schleifscheibe,
- Fig. 2: einen Schnitt durch den Scheibenteil entsprechend Fig. 1 längs der Linie II-II.

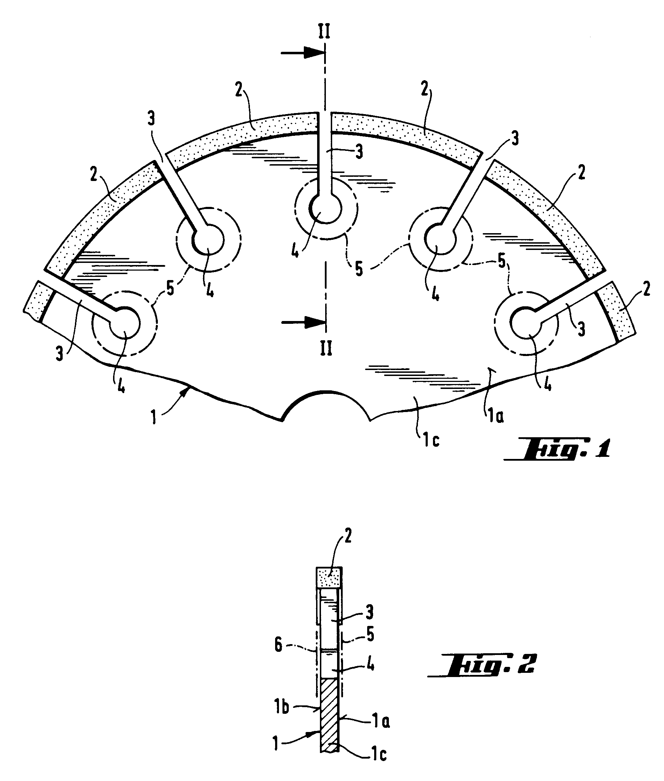

Aus den Fig. 1 und 2 ist eine Trenn- und Schleifscheibe 1, bestehend aus Scheibenkörper 1c und diamantbestückten Segmenten 2 ersichtlich. Die Scheibe weist am Umfang radial verlaufende Schlitze 3 auf, deren zentrumsseitiges Ende beispielhaft in Durchbrüche 4 mündet. Die Schlitze 3 sind an sich im Scheibenkörper 1c angeordnet und finden ihre Fortsetzung im Zwischenraum der in Umfangsrichtung im Abstand voneinander angeordneten Segmenten 2.

Umgeben von einer strichpunktierten Linie ist auf den beiden Stirnseiten 1a, 1b der Scheibe 1 eine kreisförmige Zone 5, 6 angedeutet, welche dem Kugelstrahlverfahren ausgesetzt wurde. Während aus Fig. 1 die kreisförmige Ausbildung dieser Zone 5 zum Ausdruck kommt, zeigt Fig. 2 die Anordnung der Zone 5, 6 an beiden Stirnseiten 1a, 1b.

Optisch sind die dem Kugelstrahlverfahren ausgesetzten Zonen insbesondere durch eine blanke Metalloberfläche erkennbar. Um diese blanke Metalloberfläche vor Korrosionseinflüssen zu schützen, empfiehlt es sich, eine übliche Nachbehandlung, beispielsweise in Form eines Farbauftrages, durchzuführen. Sofern die Scheiben schon vor der Behandlung mittels Kugelstrahlverfahren einer Farbbehandlung unterzogen wurden, können die behandelten Zonen einer Nachbehandlung mit einer von der Grundfarbe abweichenden Farbe ausgesetzt werden. Dadurch sind die dem Kugelstrahlverfahren ausgesetzten Zonen optisch derart gut erkennbar, dass sie beispielsweise als Kennzeichnung für solch behandelte und damit höheren Sicherheits-und Qualitätsanforderungen gerechtwerdende Scheiben dienen können.

## Patentansprüche

1. Verfahren zur Herstellung von Trenn- und Schleifscheiben (1), welche entlang dem Umfang mit radial verlaufenden Schlitzen (3) versehen sind, **dadurch gekennzeichnet,** dass die beiden Stimseiten (1a, 1b) der Scheiben (1) im Bereich des zentrumsseitigen Endes der Schlitze (3) mit einer im wesentlichen kreisförmigen, zum zentrumsseitigen Ende der Schlitze (3) konzentrischen Zone (5, 6) einem Kugelstrahlverfahren ausgesetzt werden.

## Claims

1. A process for the manufacture of separating and grinding discs (1), which are provided with radially extending slots (3) along the periphery, **characterized in that** the two side surfaces (1a, 1b) of the discs (1) are subjected to a shot-blasting process in the area of the centre end of the slots (3) having a zone (5, 6), which is essentially circular and concentric towards the centre end of the slots (3).

## Revendications

1. Procédé de fabrication de disques de tronçonnement et de meulage (1) qui sont munis le long de la périphérie de fentes (3) s'étendant radialement, caractérisé par le fait que les deux faces frontales (1a, 1b) du disque (1), dans la région d'extrémité de la fente (3) du côté du centre, sont soumises à un procédé de grenaillage dans une zone (5, 6) sensiblement circulaire, concentrique à la région d'extrémité de la fente (3) du côté du centre.
